(19) Europäisches Patentamt
European Patent Office
Office européen des brevets

(11)   EP 2 492 417 B1

(12)   **FASCICULE DE BREVET EUROPEEN**

(45) Date de publication et mention de la délivrance du brevet:
**14.12.2016   Bulletin 2016/50**

(51) Int Cl.:
*G01C 9/06* *(2006.01)*      *E04G 21/22* *(2006.01)*

(21) Numéro de dépôt: **12156377.9**

(22) Date de dépôt: **21.02.2012**

(54) **Procédé d'assistance au placement d'éléments de construction d'un ouvrage de génie civil**

Hilfsverfahren zum Platzieren von Bauelementen zur Erstellung eines Bauwerks

Method for assistance with the placement of construction elements of a civil engineering structure

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **25.02.2011   FR 1151575**

(43) Date de publication de la demande:
**29.08.2012   Bulletin 2012/35**

(73) Titulaire: **Commissariat à l'Énergie Atomique et aux Énergies Alternatives 75015 Paris (FR)**

(72) Inventeurs:
• **CARMONA, Mikaël 38570 TENCIN (FR)**
• **SCHERMESSER,M. Patrick 38240 MEYLAN (FR)**

(74) Mandataire: **Colombo, Michel et al Brevinnov 310 avenue Berthelot 69008 Lyon (FR)**

(56) Documents cités:
**WO-A1-2009/118355      CH-A5- 673 498**
**DE-A1- 4 409 150      DE-A1- 19 520 795**

**Description**

L'invention concerne un procédé et un système d'assistance au placement d'éléments de construction d'un ouvrage de génie civil. Elle a également pour objet un élément de construction pour ce système d'assistance.

Il est connu de construire un ouvrage de génie civil par placement et assemblage d'éléments de construction les uns avec les autres.

Par ouvrage de génie civil, on désigne toutes constructions qui sont l'oeuvre d'êtres humains telles que des murs, des ponts, des routes, des pipelines.

Par élément de construction, on désigne ici tout élément qui, après assemblage les uns avec les autres, constitue l'ouvrage de génie civil. Généralement les éléments de construction sont structurellement identiques les uns aux autres. Ainsi, dans l'ouvrage, ils ne diffèrent les uns des autres que par leur orientation et leur position respectives.

La construction d'un ouvrage nécessite d'orienter correctement les uns par rapport aux autres chaque élément de construction.

Pour faire cela, le déposant connait des procédés d'assistance au placement d'éléments de construction d'un ouvrage de génie civil. Par exemple, de tels procédés connus comprennent l'ajustement de l'orientation de chaque élément de construction en fonction d'un écart entre une orientation mesurée pour cet élément de construction et une consigne d'orientation. L'orientation d'un élément est également connue sous le terme de « attitude ».

Typiquement l'orientation est mesurée en plaçant un niveau sur une face extérieure de l'élément de construction. Ensuite, l'utilisateur ajuste l'orientation de l'élément de construction en fonction de la mesure relevée grâce au niveau jusqu'à obtenir l'orientation désirée.

Ces opérations de mesure et d'ajustement doivent être réalisées avec un soin particulier pour garantir la conformité de l'ouvrage avec des plans prédéfinis.

Le placement des éléments de construction prend donc du temps et ralentit la construction de l'ouvrage. Le placement des éléments est également sujet à des erreurs humaines.

De l'état de la technique est également connu de la demande CH673498A5.

L'invention vise à remédier à cet inconvénient en proposant un procédé d'assistance au placement d'éléments de construction d'un ouvrage de génie civil conforme à la revendication 1.

Dans le procédé ci-dessus, c'est l'élément lui-même qui remplit la fonction de niveau. Cela facilite et rend donc plus rapide la pose de ces éléments de construction.

Les modes de réalisation de ce procédé peuvent comporter les caractéristiques des revendications dépendantes.

Ces modes de réalisation du procédé présentent en outre l'avantage suivant

- faire varier la consigne d'orientation et/ou de position en fonction de l'élément de construction à placer permet de limiter les mesures réalisées manuellement pour construire un ouvrage conforme à un plan.

L'invention a également pour objet un système d'assistance au placement d'éléments de construction comprenant :

- les éléments de construction à positionner les uns par rapport aux autres pour construire l'ouvrage, et
- au moins un capteur d'orientation apte à mesurer l'inclinaison de cet élément de construction par rapport à trois axes non coplanaires,

dans lequel :

- chaque élément de construction est équipé d'au moins un capteur d'orientation, fixé sans aucun degré de liberté à l'élément de construction, apte à mesurer l'inclinaison de cet élément de construction par rapport à trois axes non coplanaires, et
- le système comprend un dispositif électronique de signalisation apte à indiquer l'écart entre l'orientation mesurée par le capteur d'orientation de l'un quelconque des éléments de construction et une consigne d'orientation pour cet élément de construction.

Les modes de réalisation de ce système peuvent comporter une ou plusieurs des caractéristiques des revendications dépendantes.

Ces modes de réalisation du système d'assistance présentent en outre les avantages suivants :

- l'utilisation d'un capteur de position facilite le positionnement de l'élément de construction dans un référentiel lié à la terre.

L'invention a également pour objet un élément de construction pour le système ci-dessus.

Les modes de réalisation de cet élément de construction peuvent comporter une ou plusieurs des caractéristiques des revendications dépendantes.

Ces modes de réalisation de l'élément de construction présentent en outre les avantages suivants :

- l'utilisation d'un magnétomètre tri-axe en combinaison avec un accéléromètre tri-axe permet de compenser des perturbations causées par des objets magnétiques à proximité de l'élément de construction ;
- l'utilisation d'un gyromètre permet d'obtenir une mesure fiable de l'orientation même lorsque l'élément de construction est en train d'être déplacé,
- l'incorporation d'un capteur de position à l'intérieur de l'élément de construction permet en plus d'aider à positionner correctement cet élément de construction ;

- l'enfouissement du capteur d'orientation à l'intérieur de l'élément de construction permet de protéger ce capteur.

L'invention sera mieux comprise à la lecture de la description qui va suivre, donnée uniquement à titre d'exemple non limitatif et faite en se référant aux dessins sur lesquels :

- la figure 1 est une illustration schématique de l'architecture d'un système d'assistance au placement d'éléments de construction d'un ouvrage de génie civil,
- la figure 2 est une illustration schématique d'un élément de construction, et
- la figure 3 est un organigramme d'un procédé de fabrication des éléments de construction et d'assistance au placement de ces éléments de construction.

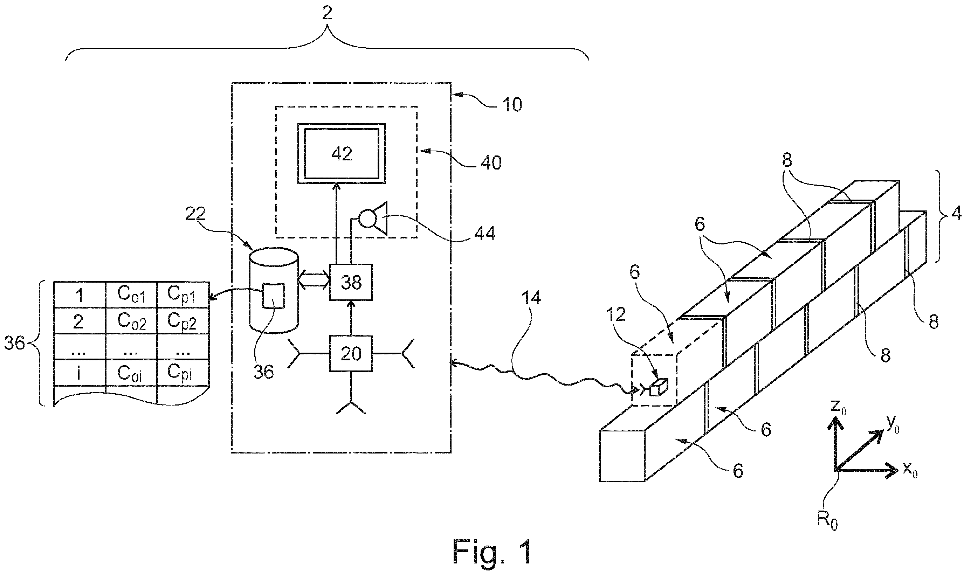

La figure 1 représente un système 2 d'assistance au placement d'éléments de construction d'un ouvrage de génie civil. Pour simplifier la figure 1, l'ouvrage de génie civil en cours de construction est un simple mur 4.

L'ouvrage 4 est formé par l'empilement les uns au-dessus des autres d'éléments de construction 6. Dans ce mode de réalisation, les éléments de construction 6 sont structurellement identiques les uns aux autres. Par exemple, les éléments 6 sont des briques de même dimension.

Dans l'ouvrage 4, les éléments 6 sont rendus solidaires les uns des autres à l'aide d'un liant 8 tel que du ciment.

Le système 2 comprend les éléments 6 et un dispositif 10 de signalisation.

Chaque élément 6 comporte un module instrumenté 12 apte à mesurer, notamment, l'orientation de cet élément dans un référentiel $R_0$ lié à la terre. Ce référentiel $R_0$ comporte trois axes $X_0$, $Y_0$ et $Z_0$ non coplanaires et non colinéaires entre eux. Ici les axes $X_0$, $Y_0$ et $Z_0$ sont orthogonaux entre eux. L'axe $Z_0$ est vertical et donc parallèle au champ de pesanteur.

Le module instrumenté 12 est également capable de transmettre, par l'intermédiaire d'une liaison 14 sans fil, les différentes grandeurs physiques mesurées au dispositif 10 de signalisation.

La liaison 14 est typiquement réalisée en modulant en amplitude ou en fréquence une onde électromagnétique.

Le dispositif 10 comporte un capteur 20 de position apte à mesurer les coordonnées $x_0$, $y_0$ et $z_0$ de chaque élément 6 dans le référentiel $R_0$. De préférence, le capteur 20 détermine les coordonnées $x_0$, $y_0$ et $z_0$ à partir des ondes électromagnétiques émises par le module instrumenté 12. De tels capteurs de position capables de localiser un objet à partir d'ondes électromagnétiques émises par cet objet sont connus. Par exemple, des informations sur de tels capteurs peuvent être obtenues à partir du document suivant :

M.ILYAS, I.MAHGOUB, « Handbook of sensor networks, Compact sensing systems », CRC PRESS, 2005.

Par exemple, le capteur 20 est équipé de plusieurs antennes pour déterminer par trilatération et/ou par triangulation la position de l'élément 6. Pour cela, les temps d'arrivée de l'onde électromagnétique et/ou les angles d'arrivée de cette onde électromagnétique peuvent être utilisés.

Ici, en plus de remplir la fonction de capteur de position, le capteur 20 remplit également la fonction de récepteur des mesures réalisées par le module instrumenté 12 et transmises au dispositif 10 par l'intermédiaire de la liaison 14.

Le dispositif 10 est équipé d'une mémoire 22 contenant une table 36. Sur la figure 1, cette table 36 est représentée plus en détail juste à côté de la mémoire 22. Par exemple, la table 36 associe à un identifiant i d'un élément de construction une consigne $C_{oi}$ d'orientation et une consigne $C_{pi}$ de position. Ici, l'identifiant i est simplement un numéro d'ordre indiquant l'ordre dans lequel doivent être placés les différents éléments 6. Ainsi, la table 36 associe au premier élément 6 placé les consignes $C_{o1}$ et $C_{p1}$. Ensuite, elle associe au deuxième élément 6 placé pour construire l'ouvrage 4, les consignes $C_{o2}$ et $C_{p2}$. Dès lors, cette table 36 définit l'ordre dans lequel doivent être placés les éléments 6 ainsi que l'orientation et la position de chacun de ces éléments 6. Typiquement, la table 36 est construite à partir du plan de l'ouvrage à construire. Le symbole « ... » dans la table 36 de la figure 1 indique seulement que toutes les lignes de cette table n'ont pas été représentées.

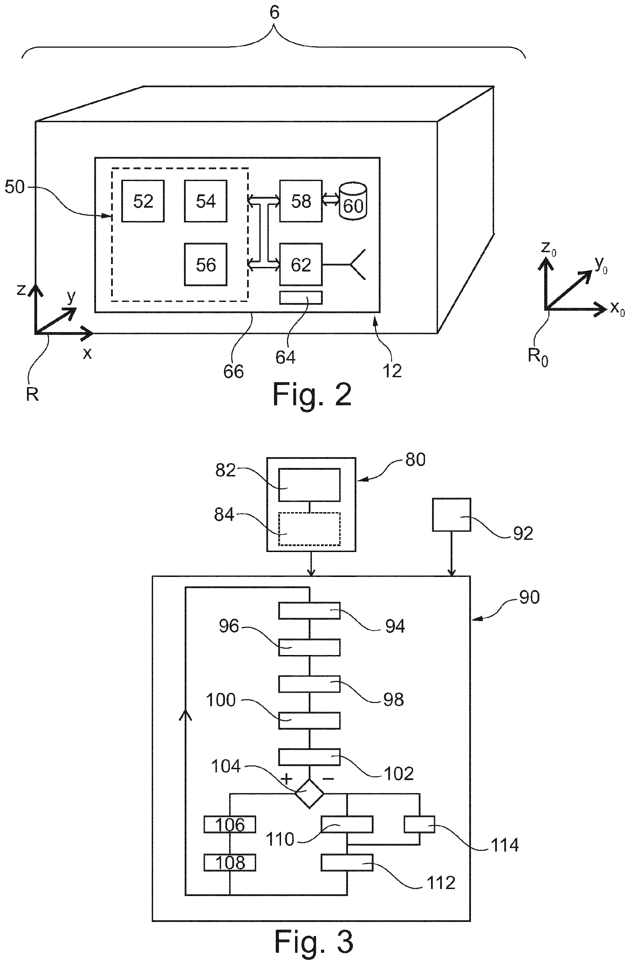

Un calculateur électronique programmable 38 est raccordé à la mémoire 22 et au capteur 20. Ce calculateur est apte à exécuter des instructions enregistrées sur un support d'enregistrement d'informations. A cet effet, la mémoire 22 comporte les instructions nécessaires pour exécuter le procédé de la figure 3.

Ce calculateur 38 est également raccordé à une interface homme-machine 40. Par exemple, cette interface 40 incorpore ici un écran 42 et un microphone 44 commandés par le calculateur 38.

La figure 2 représente plus en détail un élément 6 de construction.

Les éléments 6 sont des éléments constitutifs de l'ouvrage. Ils sont tous identiques et seul l'un d'entre eux est décrit en détail.

Ici, l'élément 6 est très dur pour supporter des poids importants, par exemple, supérieurs à une tonne. Par exemple, l'élément 6 est réalisé dans un matériau ou un mélange de matériaux dont le module de Young est supérieur à 10 ou 20 GPa.

L'élément 6 est conformé pour s'assembler facilement avec les autres éléments 6. Par exemple, chaque élément 6 présente au moins une face d'appui plane sur laquelle un autre élément de construction peut être disposé. Dans le cas de l'élément 6 représenté, celui-ci est un parallélépipède rectangle.

Le module 12 instrumenté est enfoui à l'intérieur du ou des matériaux constituant l'élément 6. Ainsi, aucun des éléments constitutifs de ce module 12 n'affleure sur l'une des faces de l'élément 6 ou n'est en saillie par rapport aux faces de l'élément 6.

Le module 12 comporte notamment un capteur 50 d'orientation apte à mesurer l'inclinaison de l'élément 6 par rapport aux axes $X_0$, Yo et $Z_0$ du référentiel $R_0$ à trois dimensions.

Le capteur 50 est par exemple une centrale inertielle ou d'attitude.

Les centrales d'attitude et leur fonctionnement sont par exemple décrits dans les documents suivants :

- J.B. KUIPERS, « Quaternions and rotation séquences : a primer with applications to orbits, aerospace and virtual reality », Paper, 2002,
- O.J. WOODMAN, «An introduction to inertial navigation », University of Cambridge, Computer laboratory, 696, 2007.

Un tel capteur d'orientation comprend un accéléromètre tri-axe 52, un magnétomètre tri-axe 54 et un gyromètre tri-axe 56.

L'accéléromètre 52 est capable de mesurer la direction du champ de pesanteur dans un référentiel R. Le référentiel R est solidaire de l'élément 6. Il comporte trois axes X, Y et Z non coplanaires et non colinéaires entre eux. Ici, les axes X, Y et Z sont orthogonaux entre eux. Par exemple, on suppose que les axes X et Y sont parallèles à une face inférieure de l'élément 6 tandis que les axes X et Z sont parallèles à une face latérale de cet élément 6. L'accéléromètre 52 mesure les coordonnées du vecteur $a_r$ d'accélération dans le référentiel R. En situation statique ou quasi-statique, ce vecteur $a_r$ est relié aux coordonnées d'un vecteur $a_0$ du champ de pesanteur mesuré dans le référentiel $R_0$ par la relation suivante :

$$(1) \qquad a_r = Pa_0,$$

où P est une matrice qui donne l'orientation de l'élément 6 dans le référentiel $R_0$.

Par statique ou quasi-statique, on désigne le fait que l'intensité de l'accélération causée par un déplacement de l'élément 6 est négligeable devant l'intensité du champ de pesanteur. Par exemple, on considère que l'intensité de l'accélération est négligeable si elle est au moins trois, dix ou trente fois inférieure à l'intensité du champ de pesanteur.

La matrice P comporte cinq inconnues qui doivent être déterminées pour déterminer l'orientation de l'élément 6.

Par exemple, l'accéléromètre tri-axe est un accéléromètre vendu par la société ANALOG DEVICE® sous la référence ADXL327BCPZ.

Le magnétomètre 54 mesure les coordonnées $h_r$ du champ magnétique terrestre dans le référentiel R. Les coordonnées $h_r$ dans le référentiel R sont reliées aux coordonnées $h_0$ de ce champ magnétique terrestre dans le référentiel $R_0$ par la relation suivante :

$$(2) \qquad h_r = Ph_0,$$

où :

- $h_r$ sont les coordonnées du champ magnétique terrestre mesurées dans le référentiel R,
- $h_0$ sont les coordonnées du champ magnétique terrestre mesurées dans le référentiel $R_0$, et
- P est la même matrice que celle de la relation (1).

Les coordonnées $a_0$ et $h_0$ du champ de pesanteur et du champ magnétique terrestre dans le référentiel $R_0$ sont des constantes prédéterminées.

Les relations (1) et (2) forment un système à six équations à cinq inconnues. Cela permet donc de déterminer l'orientation de l'élément 6 dans le référentiel $R_0$ dans l'hypothèse où l'élément 6 est statique ou quasi-statique.

Le fait d'avoir six équations pour seulement cinq inconnues permet d'accroître la robustesse de l'orientation à mesurer, notamment, face à des perturbations magnétiques provoquées par des objets magnétiques extérieurs mécaniquement indépendant de l'élément 6.

Le gyromètre 56 mesure la vitesse angulaire de rotation de l'élément 6 autour des trois axes X, Y et Z. L'utilisation du gyromètre permet de mesurer l'orientation de l'élément 6 même si celui-ci n'est pas statique ou quasi-statique. Ainsi, grâce à ce gyromètre, il devient possible de mesurer l'orientation de l'élément 6 au cours de son déplacement à une vitesse non constante.

Le capteur 50 est raccordé à un calculateur embarqué 58 programmable. Ce calculateur exécute des instructions enregistrées dans une mémoire 60 du module 12. La mémoire 60 comprend les instructions nécessaires pour l'exécution du procédé de la figure 3.

Le module 12 comprend également :

- un émetteur 62,
- une batterie 64 d'alimentation des différents composants électroniques du module 12, et
- une coque 66 rigide pour protéger les différents composants du module instrumenté 12.

L'émetteur 62 est raccordé au calculateur 58. Cet émetteur 62 établit et transmet des informations par l'intermédiaire de la liaison 14.

Par exemple, la coque 66 est réalisée dans un matériau présentant un module de Young strictement supérieur à celui du matériau utilisé pour réaliser l'élément 6 de constructions. Ici, le module de Young de la coque 66 est supérieur à 50 GPa ou 70 GPa. L'ensemble des composants électroniques du module 12 précédemment décrits sont logés à l'intérieur de cette coque 66 pour y être protégés.

La fabrication de l'élément 6 et le fonctionnement du système 2 vont maintenant être décrits à l'aide du procédé de la figure 3.

Initialement, lors d'une phase 80, on procède à la fabrication des éléments 6 de construction.

Plus précisément, lors d'une étape 82, chaque élément 6 est fabriqué et le module instrumenté 12 est incorporé à l'intérieur de l'élément 6.

Par exemple, le module instrumenté 12 est incorporé dans le matériau brut utilisé pour réaliser l'élément 6. Ensuite, ce matériau brut incorporant le module 12 est façonné, par exemple par moulage ou autre, pour obtenir la forme définitive de l'élément de construction. Dans ce cas, l'orientation du module instrumenté 12 par rapport au référentiel R est inconnue à l'issue de l'étape 82.

Dans un autre exemple de fabrication, l'élément 6 est d'abord façonné et un logement est creusé dans l'élément 6 pour recevoir le module instrumenté 12. Ensuite, le module instrumenté 12 est fixé dans ce logement. Par exemple, le module instrumenté 12 est déposé au fond de ce logement puis ce logement est rebouché. De préférence, lorsque le module instrumenté 12 est disposé dans le logement, celui-ci est disposé à l'intérieur de ce logement selon une orientation prédéterminée de sorte que l'orientation du module 12 dans le référentiel R est connue.

Après l'étape 82, si l'orientation du module instrumenté 12 dans le référentiel R est inconnue, alors on procède à une étape 84 de calibration. Lors de cette étape 84, l'élément 6 de construction est placé dans une orientation prédéterminée puis le capteur 50 mesure l'orientation de l'élément 6. Cette orientation mesurée est appelée orientation de calibration. Ensuite, le calculateur 58 corrige les orientations mesurées émises par l'émetteur 62 en fonction de l'orientation de calibration pour que les mesures émises correspondent, quel que soit l'élément de construction, à une orientation mesurée dans le même référentiel $R_0$.

La phase de fabrication s'achève alors.

Il est alors procédé à la fourniture des éléments de construction sur le chantier. Par exemple, les éléments de construction sont livrés sur le chantier où doit être construit l'ouvrage. Débute alors une phase 90 de construction de l'ouvrage 4.

Au préalable, lors d'une étape 92, la table 36 est construite à partir d'un plan de l'ouvrage en tenant compte de l'épaisseur du liant 8 placé entre chacun des éléments de construction.

Lors du placement de chacun des éléments de construction, l'utilisateur est assisté par le système 2.

Le fonctionnement du système 2 est maintenant décrit dans le cas particulier du placement du i-ième élément 6 de construction dans l'ouvrage 4.

Lors d'une étape 94, le i-ième élément de construction fourni est déplacé par l'utilisateur pour l'amener vers l'ouvrage 4. Le calculateur 58 détecte ce déplacement. Par exemple, le calculateur 58 détecte le déplacement de l'élément 6 à partir des mesures de l'accéléromètre 52. En réponse, il sort d'un mode de veille pour passer dans un mode actif.

Lors d'une étape 96, dans le mode actif, le capteur 50 mesure l'orientation de l'élément 6 dans le référentiel $R_0$ et transmet l'orientation mesurée à l'émetteur 62 qui la transmet au dispositif 10.

Lors d'une étape 98, le capteur 20 mesure la position de l'élément 6 à partir des ondes électromagnétiques émises par l'émetteur 62.

Lors d'une étape 100, le calculateur 38 sélectionne dans la table 36 les consignes $C_{oi}$ et $C_{pi}$ associées au numéro d'ordre i.

Lors d'une étape 102, le calculateur 38 calcule l'écart entre l'orientation mesurée et la consigne $C_{oi}$ d'orientation. Le calculateur 38 calcule également l'écart entre la position mesurée par le capteur 20 et la consigne $C_{pi}$ de position.

Lors d'une étape 104, le calculateur 38 détermine si les écarts calculés sont significatifs. Par exemple, lors de l'étape 104, le calculateur 38 compare les écarts calculés à des seuils prédéterminés. L'écart est significatif si un seuil prédéterminé est franchi.

S'il existe au moins un écart significatif, alors le calculateur procède à une étape 106 lors de laquelle il commande l'interface homme-machine 40 pour indiquer à l'utilisateur cet écart.

En réponse, lors d'une étape 108, l'utilisateur ajuste le placement de l'élément 6 de construction en fonction des écarts indiqués pour essayer de les réduire. Le procédé retourne alors à l'étape 94 pour continuer à ajuster le placement du i-ième élément de construction.

Si lors de l'étape 104, le calculateur 38 établit que les écarts ne sont pas significatifs, cela signifie que l'élément 6 est maintenant correctement orienté et positionné. Dans ce cas, lors d'une étape 110, le calculateur 38 indique, à l'utilisateur, que l'élément 6 est correctement placé par le biais de l'interface homme-machine 40. En réponse, l'utilisateur ne déplace plus cet élément 6.

En parallèle de l'étape 110, lors d'une étape 114, le calculateur 38 identifie le prochain élément de construction à placer. Dans ce mode de réalisation, cela consiste simplement à incrémenter le numéro d'ordre i pour passer au prochain élément de construction à placer.

Lors d'une étape 112, le calculateur 58 de l'élément 6 détecte l'absence de déplacement pendant une durée prédéterminée. Si l'élément 6 n'a pas été déplacé pendant cette durée prédéterminée, il passe automatiquement du mode actif au mode de veille. En mode de veille, l'émetteur 62 est désactivé de sorte que l'élément 6 n'émet plus aucune onde électromagnétique. De plus, ici, dans le mode de veille, le magnétomètre 54 et le gyromètre 56 sont également désactivés pour économiser l'énergie stockée dans la batterie 64.

Ensuite, le procédé retourne à l'étape 94 pour placer le (i+1)-ième élément de construction.

De nombreux autres modes de réalisation sont possibles. Par exemple, l'élément de construction peut être un moellon, une poutre, un tuyau, un tuyau de pipeline, une vitre, une plaque en polymère, un bloc de béton ou autres.

L'élément de construction peut être réalisé à partir d'un seul ou plusieurs matériaux tels que du ciment, du béton, du béton armé, du métal, du bois, de l'aggloméré, de la colle ou des liants.

L'élément de construction peut également présenter des trous ou des saillies destinés à s'emboîter avec une forme complémentaire d'un autre élément de construction.

Le module instrumenté 12 n'est pas nécessairement enfoui à l'intérieur de l'élément de construction. Par exemple, il est fixé, à l'aide de colle ou de vis, sur une face extérieure de l'élément de construction.

Les référentiels dans lesquels l'accéléromètre, le magnétomètre et le gyromètre obtiennent leurs mesures respectives ne sont pas nécessairement confondus. Toutefois, ils doivent être fixes les uns par rapport aux autres et la position de ces référentiels les uns par rapport aux autres doit être connue.

D'autres modes de réalisation du capteur d'orientation sont possibles. Par exemple, le capteur d'orientation peut être réalisé à partir de trois roues codeuses déterminant chacune l'angle entre un axe respectif du référentiel R et un bras mobile qui s'aligne automatique parallèlement au champ de pesanteur.

Le gyromètre 56 peut être omis si les déplacements lors de l'ajustement du placement de l'élément de construction sont suffisamment lents pour que l'on soit en situation statique ou quasi statique. Une autre solution pour se passer du gyromètre 56 consiste à attendre la fin du déplacement avant de réaliser une nouvelle mesure.

Le capteur de position peut être intégré à l'élément de construction. Dans ce cas, le capteur 20 du dispositif 10 de signalisation est omis. La position mesurée par ce capteur intégré est alors transmise, par exemple, par l'intermédiaire de l'émetteur 62 au dispositif 10. Le capteur de position susceptible d'être intégré à l'intérieur de l'élément de construction est par exemple un capteur GPS (« Global Positionning System »).

Dans un autre mode de réalisation, le capteur de position est omis. Ainsi, dans cette variante, le système assiste uniquement l'utilisateur pour les opérations d'orientation de l'élément de construction.

Le module instrumenté 12 peut également comporter d'autres capteurs tels que des capteurs de température ou de pression afin de donner des informations supplémentaires sur l'état de l'élément de construction.

Le module instrumenté 12 peut être alimenté par d'autres moyens qu'une batterie. Par exemple, de l'énergie peut être transférée au module instrumenté 12 par l'intermédiaire d'une liaison sans fil sous forme d'ondes électromagnétiques. Le module instrumenté 12 peut également être alimenté en énergie par un système qui convertit l'énergie mécanique du déplacement en énergie électrique.

En variante, le dispositif 10 de signalisation est remplacé par un dispositif de signalisation intégré à chaque élément de construction. Ce dispositif intégré remplit avantageusement les mêmes fonctions que le dispositifs 10. Toutefois, dans ce cas, l'interface homme-machine est simplifiée. Par exemple, l'écran est remplacé par un simple jeu de diodes électroluminescentes. Par exemple, les diodes électroluminescentes clignotent d'autant plus rapidement que l'écart entre l'orientation ou la position mesurée et la consigne d'orientation ou de position est important. L'interface homme-machine peut également être réalisée à l'aide d'éléments sensoriels tels que des vibrations.

Dans un autre mode de réalisation, le module instrumenté transmet au dispositif 10 les mesures de l'accéléromètre 52, du magnétomètre 54 et du gyromètre 56. La détermination de l'orientation dans le référentiel $R_0$ est alors réalisée par le dispositif de signalisation à partir des mesures transmises.

Le module instrumenté 12 peut également comporter un récepteur. Ceci permet alors de transférer la consigne d'orientation $C_{oi}$ et la consigne de position $C_{pi}$ au module 12 pour les enregistrer. Les écarts entre ces consignes $C_{oi}$ et $C_{pi}$ et les mesures d'orientation et de position sont alors calculés par le calculateur 58 à l'intérieur même du module instrumenté 12.

Le dispositif 10 de signalisation peut comporter un récepteur indépendant du capteur 20.

En variante, le passage de l'identifiant i à l'identifiant suivant i+1 est réalisée différemment que par détection d'une absence de déplacement de l'élément de construction. Par exemple, l'incrémentation de l'identifiant i est déclenchée manuellement par l'utilisateur en appuyant sur un bouton.

L'identifiant i de la table 36 peut être autre chose qu'un numéro d'ordre. Par exemple, on mémorise dans la mémoire 60 de chacun des modules instrumentés 12 un identifiant permettant de l'identifier de façon unique parmi l'ensemble des éléments de construction 6. L'identifiant i est alors transmis en même temps que les mesures d'orientation. Le dispositif de signalisation est adapté pour retrouver les consignes $C_{oi}$ et $C_{pi}$ dans la table 36 grâce à l'identifiant i reçu. Les consignes trouvées sont utilisées pour la comparaison des consignes à l'orientation et à la position mesurée.

Dans un autre exemple, l'identifiant enregistré dans la mémoire 60 de chaque élément 6 est le même pour tous les éléments 6 de construction structurellement identiques. Par exemple, toutes les briques de mêmes dimensions ont le même identifiant. Autrement dit, les éléments de construction qui sont interchangeables entre eux portent le même identifiant de construction.

Le consigne d'orientation ou de position pour un élément donné peut être prédéterminée en fonction de l'orientation et/ou de la position mesurée pour un autre élément de construction déjà placé dans le même ouvrage.

L'étape 108 consistant à ajuster le placement de l'élément de construction peut être réalisée par un être humain ou par un robot manipulateur équipé de moyens de préhension de l'élément de construction et capable d'en ajuster l'orientation et/ou la position. Typiquement, le robot est actionné par des moteurs. Dans le cas d'un robot, le dispositif de signalisation envoie les écarts déterminés à ce robot qui ajuste alors le placement de l'élément de construction en fonction des écarts reçus. Dans ce dernier mode de réalisation, de préférence, le dispositif de signalisation est intégré au robot.

Ce qui a été décrit précédemment s'applique à tout type d'ouvrage de génie civil par exemple un mur ou toute autre construction nécessitant l'assemblage les uns avec les autres d'éléments de construction tels que par exemple un pipeline, un pont ou autres.

**Revendications**

1. Procédé d'assistance au placement d'éléments (6) de construction d'un ouvrage de génie civil, dans lequel le procédé comprend :

  - l'ajustement (108) de l'orientation de chaque élément (6) de construction en fonction d'un écart entre une orientation mesurée pour cet élément (6) de construction et une consigne d'orientation,

  **caractérisé en ce que** ce procédé comporte :

  - la fourniture des éléments de construction équipés chacun d'au moins un capteur d'orientation, (50) fixé sans aucun degré de liberté à l'élément (6) de construction, apte à mesurer l'inclinaison de cet élément (6) de construction par rapport à trois axes non coplanaires, et
  - l'ajustement (108) de l'orientation de chaque élément est réalisé en fonction de l'écart entre l'orientation mesurée par le capteur d'orientation (50) fixé à cet élément (6) de construction et la consigne d'orientation.

2. Procédé selon la revendication 1, dans lequel le procédé comprend :

  - l'identification (114) de l'élément (6) de construction à placer,
  - la sélection (100) d'une consigne d'orientation en fonction de l'élément (6) de construction identifié dans une table contenant plusieurs consignes d'orientation, et
  - l'indication (106) de l'écart entre l'orientation mesurée pour l'élément de construction identifié et la consigne sélectionnée.

3. Procédé selon la revendication 1 ou 2, dans lequel l'ajustement de la position est automatiquement réalisé par un robot de manutention de l'élément (6) de construction
en fonction dudit écart.

4. Système d'assistance au placement d'éléments de construction d'un ouvrage de génie civil, ce système comportant :

  - des éléments (6) de construction à positionner les uns par rapport aux autres pour construire l'ouvrage, et
  - au moins un capteur (50) d'orientation apte à mesurer l'inclinaison de cet élément (6) de construction par rapport à trois axes non coplanaires,

  **caractérisé en ce que** :

  - chaque élément (6) de construction est équipé d'au moins un exemplaire du capteur (50) d'orientation, fixé sans aucun degré de liberté à l'élément de construction, apte à mesurer l'inclinaison de cet élément (6) de construction par rapport
à trois axes non coplanaires, et
  - le système comprend un dispositif électronique (10) de signalisation apte à indiquer l'écart entre l'orientation mesurée par le capteur d'orientation (50) de l'un quelconque des éléments (6)
de construction et une consigne d'orientation pour cet élément (6) de construction.

5. Système selon la revendication 4, dans lequel le dispositif (10) de signalisation est mécaniquement indépendant des éléments (6)
de construction et comporte :

  - une interface homme-machine (40), et
  - au moins un calculateur électronique (38) programmé pour commander l'interface homme-machine de manière à indiquer de façon directement compréhensible par un être humain l'écart entre l'orientation mesurée par le capteur d'orientation (50) fixé sur l'élément de construction et la consigne
d'orientation pour cet élément (6) de construction.

**6.** Système selon l'une quelconque des revendications 4 à 5, dans lequel le système comporte également un capteur (20) de position apte à mesurer les coordonnées de l'élément (6) de construction le long de trois axes non coplanaires dans un référentiel lié à la terre, et le dispositif (10) de signalisation est apte à indiquer également un écart entre la position mesurée par le capteur de position pour l'un quelconque des éléments (6) de construction et une consigne de position pour cet élément de construction.

**7.** Elément de construction d'un système conforme à l'une quelconque des revendications 4 à 6, l'élément de construction comportant au moins un capteur (50) d'orientation, fixé sans aucun degré de liberté à l'élément (6) de construction, apte à mesurer l'inclinaison de cet élément (6) de construction par rapport à trois axes non coplanaires, **caractérisé en ce que** l'élément (6) de construction est choisi dans le groupe composé d'une brique, d'un moellon, d'un tube, d'une poutre et d'une plaque.

**8.** Elément selon la revendication 7, dans lequel le capteur (50) d'orientation comprend :

- un accéléromètre tri-axe (52) capable de mesurer l'intensité du champ de pesanteur le long de trois axes de mesure non coplanaires, et
- un magnétomètre tri-axe (54) capable de mesurer l'intensité du champ magnétique terrestre le long d'au moins trois axes de mesure non coplanaires.

**9.** Elément selon la revendication 8, dans lequel le capteur d'orientation (50) comprend également un gyromètre (56), fixé sans aucun degré de liberté à l'élément (6) de construction, capable de mesurer la vitesse angulaire de rotation de l'élément (6) de construction autour de trois axes de mesure non coplanaires.

**10.** Elément selon l'une quelconque des revendications 7 à 9, dans lequel l'élément (6) de construction comporte également un capteur de position apte à mesurer des coordonnées de l'élément (6) de construction le long de trois axes non coplanaires dans un référentiel lié à la terre.

**11.** Elément selon l'une quelconque des revendications 7 à 10, dans lequel le capteur (50) d'orientation est enfoui à l'intérieur de l'élément (6) de construction de manière à ce qu'aucun élément constitutif du capteur ne soit affleurant avec une face externe de l'élément (6) de construction ou en saillie sur une face externe de l'élément (6) de

construction.

**12.** Elément selon l'une quelconque des revendications 7 à 11, dans lequel l'élément (6) de construction est :

- apte à être positionné par rapport à d'autres éléments (6) de construction pour construire l'ouvrage de génie civil, chacun des autres éléments (6) de construction étant aussi équipé d'au moins un exemplaire du capteur d'orientation, (50) fixé sans aucun degré de liberté à cet autre élément (6) de construction, apte à mesurer l'inclinaison de cet autre élément (6) de construction par rapport à trois axes non coplanaires, et
- apte à coopérer avec un dispositif électronique de signalisation apte à indiquer l'écart entre l'orientation mesurée par le capteur d'orientation (50) de l'un quelconque des éléments (6) de construction et une consigne d'orientation pour cet élément (6) de construction.

**Patentansprüche**

**1.** Hilfsverfahren zum Platzieren von Bauelementen (6) zur Erstellung eines Bauwerks, wobei das Verfahren Folgendes aufweist:

- das Einstellen (108) der Ausrichtung von jedem Bauelement (6) in Abhängigkeit von einer Abweichung zwischen einer gemessenen Ausrichtung für dieses Bauelement (6) und einem Sollwert der Ausrichtung,

**dadurch gekennzeichnet, dass** das Verfahren Folgendes aufweist:

- das Bereitstellen von Bauelementen, die jeweils mit mindestens einem Ausrichtungssensor (50) ausgestattet sind, der ohne Freiheitsgrad an dem Bauelement (6) befestigt wird, der geeignet ist, die Neigung dieses Bauelements (6) gegenüber von drei nicht koplanaren Achsen zu messen, und
- das Einstellen (108) der Ausrichtung von jedem Element wird in Abhängigkeit von der Abweichung zwischen der Ausrichtung, die von dem Ausrichtungssensor (50) gemessen wird, der an diesem Bauelement (6) befestigt wird, und dem Sollwert der Ausrichtung durchgeführt.

**2.** Verfahren nach Anspruch 1, wobei das Verfahren Folgendes aufweist:

- das Identifizieren (114) des zu platzierenden Bauelements (6),

- das Auswählen (100) eines Sollwerts der Ausrichtung in Abhängigkeit von dem identifizierten Bauelement (6) aus einer Tabelle, die mehrere Sollwerte der Ausrichtung enthält, und

- das Angeben (106) der Abweichung zwischen der gemessenen Ausrichtung für das identifizierte Bauelement und dem ausgewählten Sollwert.

**3.** Verfahren nach Anspruch 1 oder 2, wobei das Einstellen der Position durch einen Handhabungsroboter des Bauelements (6) in Abhängigkeit von der Abweichung automatisch durchgeführt wird.

**4.** Hilfssystem zum Platzieren von Bauelementen zur Erstellung eines Bauwerks, wobei das System Folgendes aufweist:

- Bauelemente (6) die zueinander zu positionieren sind, um das Bauwerk zu erstellen, und
- mindestens einen Ausrichtungssensor (50), der geeignet ist, die Neigung dieses Bauelements (6) gegenüber von drei nicht koplanaren Achsen zu messen, **dadurch gekennzeichnet, dass**:
- jedes Bauelement (6) mit mindestens einem Exemplar des Ausrichtungssensors (50) ausgestattet ist, der ohne Freiheitsgrad an dem Bauelement befestigt ist, der geeignet ist, die Neigung dieses Bauelements (6) gegenüber von drei nicht koplanaren Achsen zu messen, und
- das System eine elektronische Signalisierungsvorrichtung (10) aufweist, die geeignet ist, die Abweichung zwischen der Ausrichtung, die von dem Ausrichtungssensor (50) von einem beliebigen der Bauelemente (6) gemessen wird, und einem Sollwert der Ausrichtung für dieses Bauelement (6) anzugeben.

**5.** System nach Anspruch 4, wobei die Signalisierungsvorrichtung (10) mechanisch unabhängig von den Bauelementen (6) ist und Folgendes aufweist:

- eine Mensch-Maschine-Schnittstelle (40) und
- mindestens einen elektronischen Rechner (38), der programmiert ist, um die Mensch-Maschine-Schnittstelle derart zu steuern, um die Abweichung zwischen der Ausrichtung, die von dem Ausrichtungssensor (50) gemessen wird, der auf dem Bauelement befestigt ist, und dem Sollwert der Ausrichtung für dieses Bauelement (6) direkt von einem Menschen verständlich anzugeben.

**6.** System nach einem der Ansprüche 4 bis 5, wobei das System ebenfalls einen Positionssensor (20) aufweist, der geeignet ist, die Koordinaten des Bauelements (6) entlang von drei nicht koplanaren Achsen in einem Bezugssystem, das mit dem Boden verbunden ist, zu messen, und die Signalisierungsvorrichtung (10) geeignet ist, ebenfalls eine Abweichung zwischen der Position, die von dem Positionssensor für ein beliebiges der Bauelemente (6) gemessen wird, und einem Sollwert der Position für dieses Bauelement anzugeben.

**7.** Bauelement eines Systems nach einem der Ansprüche 4 bis 6, wobei das Bauelement mindestens einen Ausrichtungssensor (50) aufweist, der ohne Freiheitsgrad an dem Bauelement (6) befestigt ist, der geeignet ist, die Neigung dieses Bauelements (6) gegenüber von drei nicht koplanaren Achsen zu messen, **dadurch gekennzeichnet, dass** das Bauelement (6) aus der Gruppe ausgewählt ist, die aus einem Ziegelstein, einem Bruchstein, einem Rohr, einem Balken oder einer Platte zusammengesetzt ist.

**8.** Element nach Anspruch 7, wobei der Ausrichtungssensor (50) Folgendes aufweist:

- einen 3-Achsen-Beschleunigungssensor (52), der die Intensität des Schwerefelds entlang von drei nicht koplanaren Messachsen messen kann, und
- ein 3-Achs-Magnetometer (54), das die Intensität des Erdmagnetfelds entlang von mindestens drei nicht koplanaren Messachsen messen kann.

**9.** Element nach Anspruch 8, wobei der Ausrichtungssensor (50) ebenfalls ein Gyrometer (56) aufweist, das ohne Freiheitsgrad an dem Bauelement (6) befestigt ist, das die Drehwinkelgeschwindigkeit des Bauelements (6) um drei nicht koplanare Messachsen messen kann.

**10.** Element nach einem der Ansprüche 7 bis 9, wobei das Bauelement (6) ebenfalls einen Positionssensor aufweist, der geeignet ist, die Koordinaten des Bauelements (6) entlang von drei nicht koplanaren Achsen in einem Bezugssystem, das mit dem Boden verbunden ist, zu messen.

**11.** Element nach einem der Ansprüche 7 bis 10, wobei der Ausrichtungssensor (50) im Inneren des Bauelements (6) derart eingebettet ist, dass jedes Element, das den Sensor bildet, nicht mit einer Außenfläche des Bauelements (6) bündig abschließt oder über eine Außenfläche des Bauelements (6) hinausragt.

**12.** Element nach einem der Ansprüche 7 bis 11, wobei das Bauelement (6):

- geeignet ist, gegenüber von anderen Bauelementen (6) zur Erstellung eines Bauwerks angeordnet zu werden, wobei jedes der anderen Bauelemente (6) auch mit mindestens einem Exemplar des Ausrichtungssensors (50) ausgestattet ist, der ohne Freiheitsgrad an diesem anderen Bauelement (6) befestigt ist, der geeignet ist, die Neigung dieses anderen Bauelements (6) gegenüber von drei nicht koplanaren Achsen zu messen, und

- geeignet ist, mit einer elektronischen Signalisierungsvorrichtung zusammenzuwirken, die geeignet ist, die Abweichung zwischen der Ausrichtung, die von dem Ausrichtungssensor (50) gemessen wird, von einem beliebigen der Bauelemente (6) und einem Sollwert der Ausrichtung für dieses Bauelement (6) anzugeben.

**Claims**

1. Method of assisting the placement of construction elements (6) of a civil engineering work, in which the method comprises:

   - the adjustment (108) of the orientation of each construction element (6) as a function of a discrepancy between a measured orientation for this construction element (6) and an orientation setpoint,

   **characterized in that** this method comprises:

   - the supplying of the construction elements each equipped with at least one orientation sensor (50), fixed without any degree of freedom to the construction element (6), able to measure the inclination of this construction element (6) with respect to three non-coplanar axes, and
   - the adjustment (108) of the orientation of each element is carried out as a function of the discrepancy between the orientation measured by the orientation sensor (50) fixed to this construction element (6) and the orientation setpoint.

2. Method according to Claim 1, in which the method comprises:

   - the identification (114) of the construction element (6) to be placed,
   - the selection (100) of an orientation setpoint as a function of the construction element (6) identified in a table containing several orientation setpoints, and
   - the indication (106) of the discrepancy between the measured orientation for the identified construction element and the selected setpoint.

3. Method according to Claim 1 or 2, in which the adjustment of the position is carried out automatically by a robot for handling the construction element (6) as a function of the said discrepancy.

4. System for assisting the placement of construction elements of a civil engineering work, this system comprising:

   - construction elements (6) to be positioned with respect to one another so as to construct the work, and
   - at least one orientation sensor (50) able to measure the inclination of this construction element (6) with respect to three non-coplanar axes,

   **characterized in that**:

   - each construction element (6) is equipped with at least one specimen of the orientation sensor (50), fixed without any degree of freedom to the construction element, able to measure the inclination of this construction element (6) with respect to three non-coplanar axes, and
   - the system comprises an electronic signalling device (10) able to indicate the discrepancy between the orientation measured by the orientation sensor (50) of any one of the construction elements (6) and an orientation setpoint for this construction element (6).

5. System according to Claim 4, in which the signalling device (10) is mechanically independent of the construction elements (6) and comprises:

   - a man-machine interface (40), and
   - at least one electronic calculator (38) programmed to control the man-machine interface so as to indicate in a way that is directly comprehensible to a human being the discrepancy between the orientation measured by the orientation sensor (50) fixed to the construction element and the orientation setpoint for this construction element (6).

6. System according to any one of Claims 4 to 5, in which the system also comprises a position sensor (20) able to measure the coordinates of the construction element (6) along three non-coplanar axes in a frame of reference tied to the earth, and the signalling device (10) is able to also indicate a discrepancy between the position measured by the position sensor for any one of the construction elements (6) and a position setpoint for this construction element.

7. Construction element of a system in accordance with any one of Claims 4 to 6, the construction element comprising at least one orientation sensor (50), fixed without any degree of freedom to the construction element (6), able to measure the inclination of this construction element (6) with respect to three non-coplanar axes, **characterized in that** the construction element (6) is chosen from the group composed of a brick, a quarry-stone, a tube, a beam and a plate.

8. Element according to Claim 7, in which the orientation sensor (50) comprises:

   - a three-axis accelerometer (52) capable of measuring the intensity of the gravity field along three non-coplanar measurement axes, and
   - a three-axis magnetometer (54) capable of measuring the intensity of the terrestrial magnetic field along at least three non-coplanar measurement axes.

9. Element according to Claim 8, in which the orientation sensor (50) also comprises a gyrometer (56), fixed without any degree of freedom to the construction element (6), capable of measuring the angular rotation speed of the construction element (6) about three non-coplanar measurement axes.

10. Element according to any one of Claims 7 to 9, in which the construction element (6) also comprises a position sensor able to measure coordinates of the construction element (6) along three non-coplanar axes in a frame of reference tied to the earth.

11. Element according to any one of Claims 7 to 10, in which the orientation sensor (50) is buried inside the construction element (6) in such a way that no constituent element of the sensor is flush with an external face of the construction element (6) or projects from an external face of the construction element (6).

12. Element according to any one of Claims 7 to 11, in which the construction element (6) is:

   - able to be positioned with respect to other construction elements (6) so as to construct the civil engineering work, each of the other construction elements (6) being also equipped with at least one specimen of the orientation sensor (50) fixed without any degree of freedom to this other construction element (6), able to measure the inclination of this other construction element (6) with respect to three non-coplanar axes, and
   - able to cooperate with an electronic signalling device able to indicate the discrepancy between the orientation measured by the orientation sensor (50) of any one of the construction elements (6) and an orientation setpoint for this construction element (6).

Fig. 1

Fig. 2

Fig. 3

**EP 2 492 417 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- CH 673498 A5

### Littérature non-brevet citée dans la description

- **M.ILYAS, I.MAHGOUB.** Handbook of sensor networks, Compact sensing systems. CRC PRESS, 2005
- **J.B. KUIPERS.** Quaternions and rotation séquences : a primer with applications to orbits, aerospace and virtual reality. *Paper,* 2002
- **O.J. WOODMAN.** An introduction to inertial navigation. University of Cambridge, Computer laboratory, 2007, 696